# DEMANDE DE BREVET EUROPEEN

(11) **EP 4 368 383 A1**
(43) Date de publication de la demande: **15.05.2024**
(21) Numéro de dépôt: 23208622.3
(22) Date de dépôt: 08.11.2023
(51) Int. Cl.: B32B 5/02, B32B 5/24, B62D 33/04, B60P 3/20

(54) **ENSEMBLE DE CARROSSERIE DE VÉHICULE FRIGORIQUE ET PROCÉDÉ DE FABRICATION ASSOCIÉ**

(30) Priorité: 10.11.2022 FR 2211746
(71) Demandeur: Lecapitaine Industrie, 50000 Saint Lô (FR)
(72) Inventeur: YBERT, Florentin, 50800 VILLEDIEU-LES-POÊLES (FR)
(74) Mandataire: Lavoix

(57) **Abrégé**

L'invention concerne un ensemble de carrosserie (12) pour véhicule frigorifique comprenant une paroi composite (16, 22) comprenant au moins un panneau composite (30), le panneau composite comprenant une surface interne (30A), délimitant au moins une partie d'une enceinte réfrigérée (26), et une surface externe (30B), séparant l'ensemble de carrosserie de l'environnement externe du véhicule, le panneau composite comprenant depuis sa surface interne vers sa surface externe, une peau interne (31), une âme (32) en mousse de polyéthylène téréphtalate (PET) et une peau externe (33).

La peau externe (33) définit la surface externe (30B) de ce panneau composite.

La peau interne (31) de ce panneau composite est réalisée en un matériau composite (35) comprenant des fibres noyées dans une matrice en PET et la peau externe (33) de ce panneau composite est réalisée en un matériau composite (35) comprenant des fibres noyées dans une matrice en PET.

## Description

La présente invention concerne un ensemble de carrosserie pour un véhicule frigorifique comprenant au moins une paroi composite comprenant au moins un panneau composite, le ou chaque panneau composite comprenant une surface interne, délimitant au moins une partie d'une enceinte réfrigérée, et une surface externe, séparant l'ensemble de carrosserie de l'environnement externe du véhicule frigorifique, le ou chaque panneau composite comprenant depuis sa surface interne vers sa surface externe, une peau interne, une âme en mousse de polyéthylène téréphtalate et une peau externe.

La présente invention concerne également un procédé de fabrication d'un tel ensemble de carrosserie.

L'invention s'applique à un véhicule frigorifique, en particulier un véhicule frigorifique utilitaires destiné au transport de marchandises telles que des marchandises périssables par exemple. Un tel véhicule frigorifique est par exemple un camion frigorifique ou une camionnette frigorifique

L'invention s'applique en particulier au stockage de denrées périssables, sous température dirigée. Le stockage sous température dirigée consiste au stockage de denrées périssables à une température donnée, appelée consigne, depuis un premier instant jusqu'à un deuxième instant, le premier instant étant par exemple le départ du véhicule frigorifique de l'entrepôt et le deuxième instant est le moment de livraison du client final.

Dans les ensembles de carrosserie connus de véhicules frigorifiques, les panneaux composant les parois de ces ensembles de carrosserie comprennent des couches en des matériaux non recyclables tels que du polystyrène, des mousses de polyuréthane, du polyester thermodurcissable et/ou des matériaux dont le recyclage serait trop onéreux.

En outre, l'assemblage des différentes couches de ces panneaux connus est irréversible.

En particulier, l'Accord sur le Transport des denrées Périssables (aussi connu sous le sigle « ATP ») applicable dans de nombreux pays européens limite la vie d'une caisse frigorifique entre dix et vingt ans.

Ainsi, lorsque la durée de vie de la caisse frigorifique est dépassée, ces panneaux sont généralement enfouis dans le sol, ce qui impacte négativement l'environnement. Une seconde vie est également possible dans les pays non soumis à cet accord, mais la finalité est la même, à savoir leur enfouissement ultérieurement.

L'un des buts de l'invention est de pallier les inconvénients précités en proposant un ensemble de carrosserie qui soit plus respectueux de l'environnement en étant notamment aisément recyclable et de manière peu coûteuse.

A cet effet, dans l'ensemble de carrosserie selon l'invention, pour le ou chaque panneau composite, la peau externe définit la surface externe de ce panneau composite, et, pour le ou chaque panneau composite, la peau interne de ce panneau composite est réalisée en un matériau composite comprenant des fibres noyées dans une matrice en PET et la peau externe de ce panneau composite est réalisée en un matériau composite comprenant des fibres noyées dans une matrice en PET.

On comprend que le PET de la matrice du matériau composite de la peau interne et que le PET de la matrice du matériau composite de la peau externe est du PET recyclé ou du PET non recyclé.

On comprend que la mousse de PET de l'âme est du PET recyclé ou du PET non recyclé.

Grâce au fait que chaque couche du panneau composite est réalisée à partir de PET dans lequel sont noyées des fibres, le panneau composite est aisément recyclable. En effet, un tel panneau composite peut être broyée et une autre pièce peut être fabriquée à partir d'un matériau obtenu à partir du panneau composite broyé.

En particulier, il n'est pas nécessaire de séparer les différentes couches du panneau avant de le broyer ce qui simplifie les opérations de recyclage.

L'ensemble de carrosserie selon l'invention peut en outre comprendre une ou plusieurs des caractéristiques suivantes, prise(s) isolément ou selon toute combinaison techniquement envisageable :
- le matériau composite de la peau interne et le matériau composite de la peau externe du ou de chaque panneau composite sont chacun obtenus à partir d'au moins un panneau recyclable broyé, ledit panneau recyclable présentant une composition analogue à un panneau composite, le PET de la matrice du matériau composite de la peau interne et le PET du matériau composite de la peau externe étant du PET recyclé issu du PET du panneau recyclable broyé.
- la peau interne, l'âme et la peau externe du ou de chaque panneau composite sont fixées les unes aux autres par du PET.
- l'ensemble de carrosserie comprend au moins deux parois assemblées l'une à l'autre, au moins l'une des deux parois assemblées étant une paroi composite, l'ensemble de carrosserie comprenant, en outre, un élément de liaison lié aux faces internes des deux parois assemblées ou aux faces externes des deux parois assemblées, avantageusement avec du PET.
- l'élément de liaison est réalisé en un matériau composite comprenant des fibres noyées dans une matrice de PET, ledit matériau composite de l'élément de liaison étant obtenu à partir d'au moins un panneau recyclable broyé, ledit panneau recyclable présentant une composition analogue à un panneau composite, le PET de la matrice du matériau composite de l'élément de liaison étant du PET recyclé issu du PET du panneau recyclable broyé et les fibres du matériau composite de l'élément de liaison étant des fibres recyclées obtenues à partir des fibres du panneau recyclable broyé.
- la ou chaque paroi composite est destinée à définir une paroi latérale, une paroi avant, une paroi arrière ou une paroi supérieure du véhicule frigorifique, l'ensemble de carrosserie comprenant, en outre, une paroi inférieure destinée à former un plancher du véhicule frigorifique, la paroi inférieure comprenant au moins un panneau de plancher présentant une surface interne délimitant au moins en partie l'enceinte réfrigérée, le panneau de plancher comprenant un revêtement interne définissant la surface interne du panneau de plancher, le revêtement interne étant en un matériau composite comprenant des fibres noyées dans une matrice de PET, ledit matériau composite du revêtement interne étant avantageusement obtenu à partir d'au moins un panneau recyclable broyé, ledit panneau recyclable présentant une composition analogue à un panneau composite, le PET de la matrice du matériau composite du revêtement interne étant avantageusement du PET recyclé issu du PET du panneau recyclable broyé, les fibres du matériau composite du revêtement interne étant avantageusement des fibres recyclées obtenues à partir des fibres du panneau recyclable broyé.
- pour au moins un panneau composite, les fibres du matériau composite de la peau externe et/ou les fibres du matériau composite de la peau interne sont des fibres longues, chaque fibre longue présentant une longueur supérieure ou égale à 50 millimètres (mm).
- les fibres longues du matériau composite se présentent sous la forme d'au moins une nappe de fils tissés noyée dans la matrice en PET, les fils de ladite nappe étant formées desdites fibres longues, les fils s'étendent dans au moins deux directions différentes.

L'invention concerne également un procédé de fabrication d'un ensemble de carrosserie tel que définit précédemment, comprenant la réalisation de la ou chaque paroi composite, la réalisation de la ou chaque paroi composite comprenant la réalisation du ou de chaque panneau composite de cette paroi composite, la réalisation du ou de chaque panneau composite comprenant l'assemblage de l'âme, de la peau interne et de la peau externe les unes aux autres, avantageusement avec du PET, de sorte à obtenir ledit panneau composite.

Le procédé de fabrication selon l'invention peut en outre comprendre une ou plusieurs des étapes suivantes, prise(s) isolément ou selon toute combinaison techniquement envisageable :
- le broyage d'au moins un panneau recyclable présentant une composition analogue à un panneau composite pour obtenir une matière première, la réalisation d'un matériau composite de peau interne comprenant des fibres noyées dans une matrice en PET à partir de ladite matière première obtenue, le PET de la matrice du matériau composite de peau interne réalisé étant du PET recyclé, la réalisation d'un matériau composite de peau externe comprenant des fibres noyées dans une matrice en PET à partir de ladite matière première obtenue, le PET de la matrice du matériau composite de peau externe réalisé étant du PET recyclé, la réalisation du ou de chaque panneau composite comprenant, en outre, la réalisation de la peau interne de ce panneau composite à partir du matériau composite de peau interne réalisé et la réalisation de la peau externe de ce panneau composite à partir du matériau composite de peau externe réalisé.
- la séparation l'un de l'autre du PET de ladite matière première obtenue et des fibres de ladite matière première obtenue pour obtenir du PET séparé et des fibres séparées, le PET recyclé de la matrice du matériau composite de peau interne étant obtenue à partir du PET séparé et le PET recyclé de la matrice du matériau composite de peau externe étant obtenue à partir du PET séparé.
- l'ensemble de carrosserie comprend au moins deux parois assemblées l'une à l'autre, au moins l'une des deux parois assemblées étant une paroi composite, l'ensemble de carrosserie comprenant, en outre, un élément de liaison lié aux faces internes des deux parois assemblées ou aux faces externes des deux parois assemblées, avantageusement avec du PET, le procédé comprenant l'assemblage des deux parois l'une à l'autre, la liaison de l'élément de liaison aux faces internes des deux parois assemblées ou aux faces externes des deux parois assemblées, avantageusement avec du PET.
- le broyage d'au moins un panneau recyclable présentant une composition analogue à un panneau composite pour obtenir une matière première, la réalisation d'un matériau composite d'élément de liaison comprenant des fibres noyées dans une matrice en PET à partir de ladite matière première obtenue, le PET de la matrice du matériau composite d'élément de liaison réalisé étant du PET recyclé issu du PET de la matière première obtenue, les fibres du matériau composite d'élément de liaison réalisé étant des fibres recyclées obtenues à partir des fibres de la matière première obtenue, la réalisation de l'élément de liaison dans le matériau composite d'élément de liaison réalisé.
- la ou chaque paroi composite est destinée à définir une paroi latérale, une paroi avant, une paroi arrière ou une paroi supérieure du véhicule frigorifique, l'ensemble de carrosserie comprenant, en outre, une paroi inférieure destinée à former un plancher du véhicule frigorifique, la paroi inférieure comprenant au moins un panneau de plancher présentant une surface interne délimitant au moins en partie l'enceinte réfrigérée, le panneau de plancher comprenant un revêtement interne définissant la surface interne du panneau de plancher, le revêtement interne étant en un matériau composite comprenant des fibres noyées dans une matrice de PET, le procédé comprenant en outre le broyage d'un panneau recyclable présentant une composition analogue à un panneau composite pour obtenir une matière première, la réalisation d'un matériau composite de revêtement interne comprenant des fibres noyées dans une matrice en PET à partir de ladite matière première obtenue, le PET de la matrice du matériau composite de revêtement interne réalisé étant du PET recyclé issu du PET de la matière première obtenue, les fibres du matériau composite de revêtement interne réalisé étant des fibres recyclées obtenues à partir des fibres de la matière première obtenue, la réalisation de la paroi inférieure, la réalisation de la paroi inférieure comprenant la réalisation du panneau de plancher de la paroi inférieure, la réalisation du panneau de plancher comprenant la réalisation du revêtement interne du panneau de plancher dans le matériau composite de revêtement interne réalisé.
- pour le ou chaque panneau composite, la peau interne, l'âme et la peau externe de ce panneau composite sont assemblées par thermosoudage en utilisant le PET contenu dans la peau interne, dans l'âme et dans la peau externe.

D'autres aspects et avantages de l'inventions apparaîtront à la lecture de la description qui suit, donnée à titre d'exemple et faite en référence aux dessins annexés dans lesquels :
- [Fig 1], la figure 1 est une vue schématique de côté d'un véhicule frigorifique selon l'invention,
- [Fig 2], la figure 2 est une vue en perspective d'un panneau composite d'une paroi d'un ensemble de carrosserie du véhicule frigorifique de la figure 1,
- [Fig 3], la figure 3 est une vue en coupe d'un ensemble de carrosserie du véhicule frigorique de la figure 1 selon le plan de coupe III-III montré sur la figure 1,
- [Fig 4], la figure 4 est une vue de détail de la figure 3 repérée par la flèche IV sur la figure 3, et
- [Fig 5], la figure 5 est une vue de détail de la figure 3 repérée par la flèche V sur la figure 3.

Dans la description qui suit, les termes « longitudinal », « transversal » et « élévation » sont définis selon les directions usuelles d'un véhicule, le terme « longitudinal » se référant à la direction avant-arrière du véhicule, le terme « transversal » se référant à la direction séparant les deux roues avant ou les deux roues arrière du véhicule et le terme « élévation » se référant à la hauteur du véhicule. Dans la présente description, pour des questions de lisibilité, les dimensions des différents éléments du véhicule, de l'ensemble de carrosserie et en particulier des panneaux décrits par la suite ne sont pas représentées à l'échelle sur les figures.

En outre, dans la présente description, on entend par « une valeur V1 est sensiblement égale à une valeur V2 » que la valeur V1 est égale à la valeur V2 plus ou moins 5%.

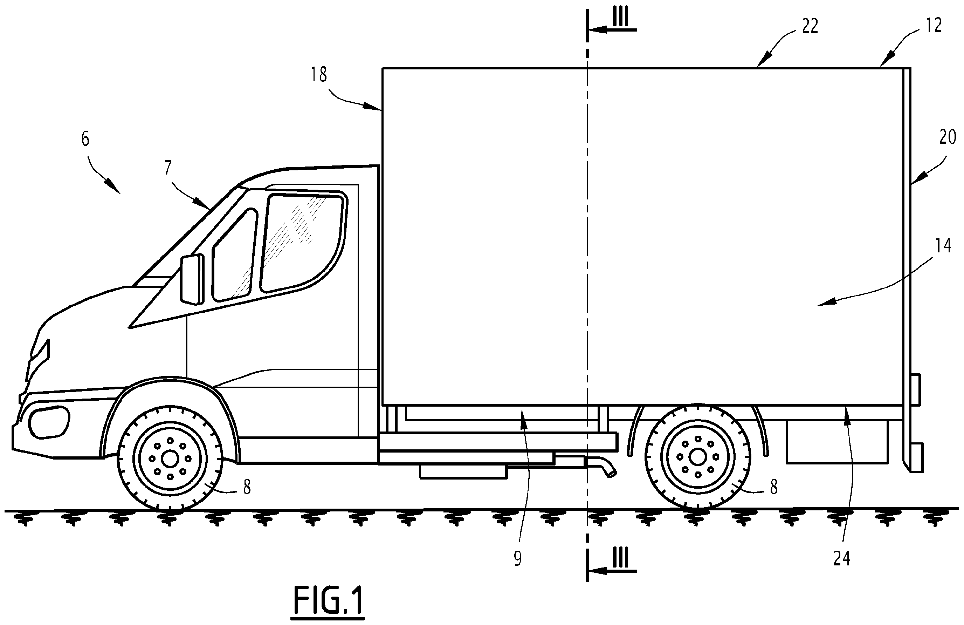

Un véhicule 6 frigorifique selon l'invention, appelé « véhicule 6 » par la suite, est décrit en référence aux figures 1 à 5. Le véhicule 6 est, par exemple, un véhicule de transport de marchandises sous température dirigée, tel qu'un camion frigorifique.

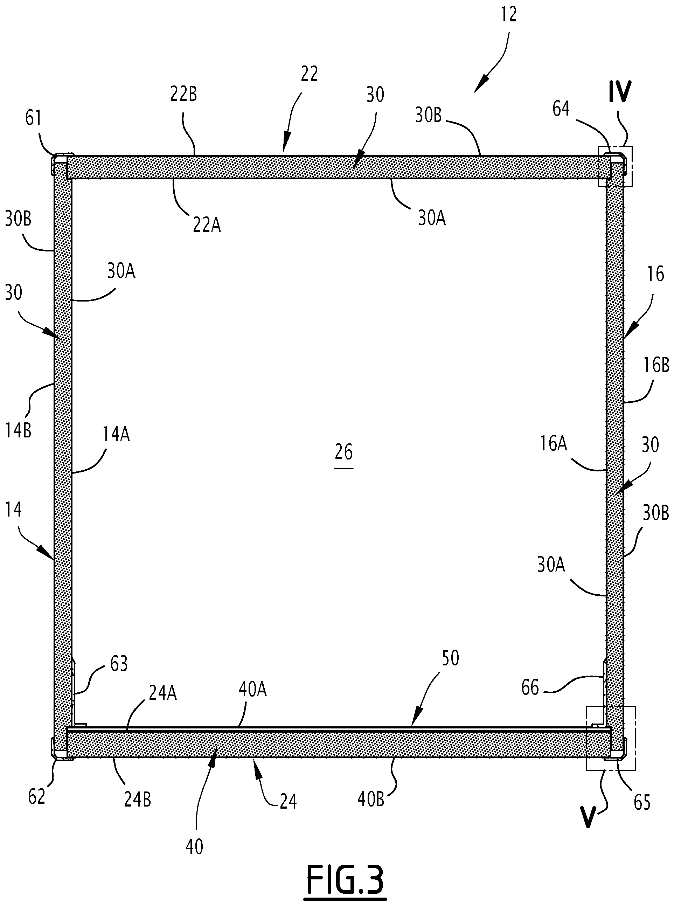

En référence à la figure 1, le véhicule 6 comporte une cabine 7, des roues 8, un châssis 9 et un ensemble de carrosserie 12 délimitant une enceinte réfrigérée 26 (visible sur la figure 3) destinée à accueillir des marchandises.

L'ensemble de carrosserie 12 est agencé sur le châssis 9.

L'ensemble de carrosserie 12 comprend au moins une paroi composite comprenant au moins un panneau composite.

Par exemple, l'au moins une paroi comprend un unique panneau composite. En variante, l'au moins une paroi comprend de l'ensemble de carrosserie 12 comprend une pluralité de panneaux composites assemblés les uns aux autres.

La ou chaque paroi composite définit par exemple une paroi du véhicule 6 parmi une paroi latérale, une paroi avant, une paroi arrière ou une paroi supérieure du véhicule 6.

Par exemple, l'ensemble de carrosserie 12 comprend au moins deux parois assemblées l'une à l'autre, au moins l'une des deux parois assemblées étant une paroi composite. Optionnellement, l'ensemble de carrosserie 12 comprend un élément de liaison lié aux faces internes des deux parois assemblées ou aux faces externes des deux parois assemblées.

La ou chaque paroi présente une face interne délimitant au moins en partie l'enceinte réfrigérée 26 et une face externe séparant l'ensemble de carrosserie 12 de l'environnement externe.

Dans le cas d'espèce, l'ensemble de carrosserie 12 décrit en référence aux figures 1 à 5, comprend six parois assemblées les unes aux autres.

Les six parois assemblées les unes aux autres formes sensiblement un parallélépipède.

Comme visible sur la figure 1, les six parois définissent une première paroi latérale 14, une deuxième paroi latérale 16 (visible sur la figure 3), une paroi avant 18, une paroi arrière 20, une paroi supérieure 22 et une paroi inférieure 24 du véhicule 6.

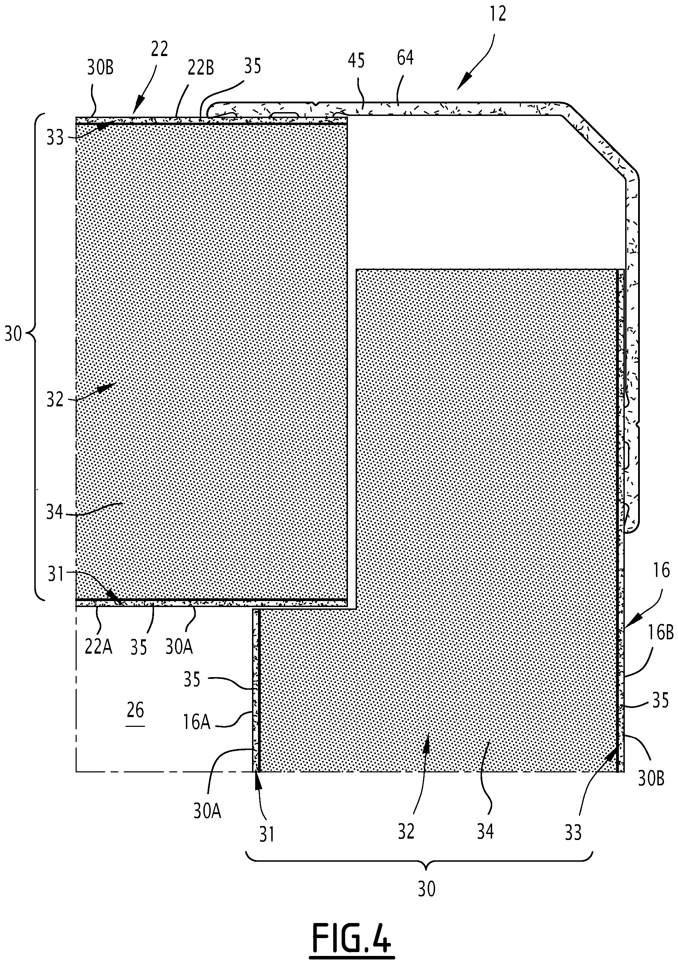

Chacune des six parois présente une face interne délimitant au moins en partie l'enceinte réfrigérée 26 et une face externe 14B, 16B, 22B, 24B séparant l'ensemble de carrosserie 12 de l'environnement externe. Seules les faces internes 14A, 16A, 22A, 24A et les faces externes 14B, 16B, 22B, 24B des parois latérales 14, 16, de la paroi supérieure 22 et de la paroi inférieure 24 sont visibles sur la figure 4.

Dans la suite de la présente description, une face interne ou surface interne d'un élément X est repérée par la référence « XA » et une face externe ou surface externe d'un élément X est repérée par la référence « XB ».

Les deux parois latérales 14, 16 s'étendent sensiblement selon la direction d'élévation et s'étendent sensiblement perpendiculairement à la direction transversale. Les deux parois latérales 14, 16 sont espacées transversalement l'une de l'autre le long de la direction transversale. Les deux parois latérales 14, 16 sont communément appelés « flancs » du véhicule 6.

Les parois avant et arrière 18, 20 sont espacées longitudinalement l'une de l'autre le long de la direction longitudinale. Les parois avant et arrière 18, 20 s'étendent sensiblement perpendiculairement à la direction longitudinale.

Par exemple, la paroi arrière 20 délimite une ou deux portes arrière du véhicule 6 permettant d'accéder et de sortir de l'enceinte réfrigérée 26.

La paroi supérieure 22 s'étend dans un plan sensiblement perpendiculaire à la direction d'élévation et relie entre eux les bords supérieurs des parois latérales 14, 16 et des parois avant et arrière 18, 20. La paroi supérieure 22 est communément appelé « pavillon ».

La première paroi latérale 14, la deuxième paroi latérale 16, la paroi avant 18, chaque porte de la paroi arrière 20, la paroi supérieure 22 sont des parois composites comprenant chacune un panneau composite 30.

En variante, au moins l'une des parois composites 14, 16, 18, 20, 22 comprend plusieurs panneaux composites 30 assemblées les uns aux autres.

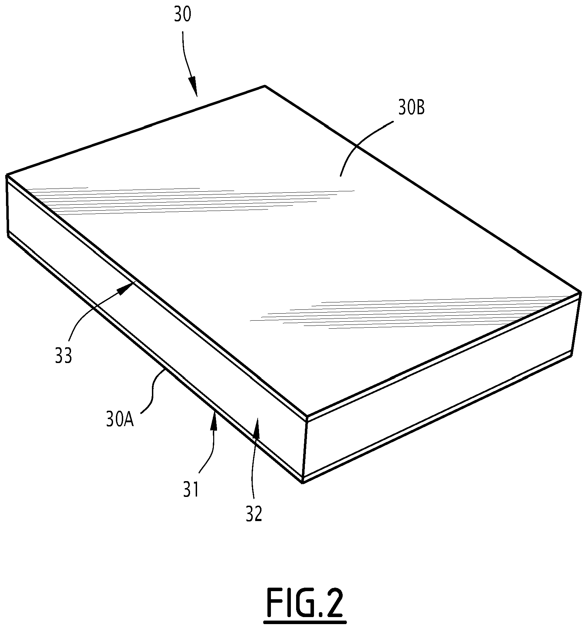

Un panneau composite 30 est décrit dans la suite en référence aux figure 2, 3 et 4. Les autres panneaux composites 30 de l'ensemble de carrosserie 12 sont analogues au panneau composite 30 décrit ci-après.

Le panneau composite 30 comprend une surface interne 30A, délimitant au moins une partie de l'enceinte réfrigérée 26, et une surface externe 30B, séparant l'ensemble de carrosserie 12 de l'environnement externe du véhicule 6.

Le panneau composite 30 comprend depuis sa surface interne 30A vers sa surface externe 30B, une peau interne 31, une âme 32 en mousse de polyéthylène téréphtalate (connu sous le sigle « PET ») et une peau externe 33, la peau interne 31 de ce panneau composite 30 étant réalisée en un matériau composite comprenant des fibres noyées dans une matrice en PET et la peau externe 32 de ce panneau composite étant réalisée en un matériau composite comprenant des fibres noyées dans une matrice en PET.

Un tel panneau composite 30 comprenant au moins trois couches est aussi connu sous le terme de « panneau sandwich ».

Le PET est un polymère thermoplastique.

L'âme 32 s'étend entre la peau interne 31 et la peau externe 33.

L'âme 32 est une couche thermiquement isolante.

Il est entendu dans la présente description par « couche thermiquement isolante» une couche conférant au panneau composite une bonne isolation thermique de l'enceinte réfrigérée 26 de l'environnement externe. L'âme présente une faible conductivité thermique, c'est-à-dire qu'elle est capable d'opposer au flux thermique qui la traverse une grande résistance thermique. L'âme présente par exemple un coefficient d'isolation thermique compris entre 10 milliwatts par millikelvin (mW.mK⁻¹) et 35 mW.mK⁻¹. Avantageusement, le coefficient d'isolation de l'âme est sensiblement égal à 25mW.mK⁻¹. Un tel coefficient d'isolation thermique permet d'obtenir un panneau composite présentant une bonne isolation thermique pour le stockage de denrées périssable.

Le PET de la mousse de l'âme 32 du panneau composite 30 est par exemple du PET recyclé (le PET recyclé est connu sous l'acronyme « R-PET » signifiant en anglais « Recycled Polyethylene Terephthalate » et en français « polyéthylène téréphtalate recyclé »).

Un tel PET recyclé est par exemple obtenu à partir du recyclage d'éléments en PET, tels que des contenants en PET recyclé (bouteilles, flacons, etc.).

En variante, le R-PET est obtenu à partir d'une matière première obtenue par le broyage d'un panneau présentant une composition analogue à un panneau composite 30, et en particulier à partir du PET séparé de ladite matière première, comme cela sera décrit plus en détails dans la suite.

On entend par « panneau recyclable présentant une composition analogue à un panneau composite 30 » un panneau composite 30 usagé, par exemple.

En variante, le PET de la mousse de l'âme 32 du panneau composite 30 est du PET non recyclé.

L'âme 32 du panneau composite 30 est par exemple réalisée dans une première mousse de PET 34.

Par exemple, la première mousse de PET 34 est réalisée en PET recyclé

La première mousse de PET 34 présente par exemple une densité supérieure ou égale à 30 kg.m⁻³ et inférieure ou égale à 70 kg.m⁻³.

Par exemple, la peau interne 31 définit la surface interne 30A du panneau composite 30.

Les fibres du matériau composite de la peau interne 31 sont, par exemple, des fibres longues.

Dans la présente description, une fibre longue est une fibre présentant une longueur supérieure ou égale à 50 millimètres (mm).

Par exemple les fibres longues du matériau composite de la peau interne 31 sont entrecroisées.

Il est entendu par « entrecroisées » que les fibres du premier matériau composite 35 se présentent sous la forme d'au moins une nappe de fils tissés noyée dans la matrice en PET.

Les fils de ladite nappe sont formées à partie desdites fibres longues.

Dans la nappe de fils tissés, les fils s'étendent dans au moins deux directions différentes.

Par exemple, les deux directions différentes dans lesquelles s'étendent les fils sont des directions perpendiculaires.

En variante, les fibres du matériau composite de la peau interne 31 sont courtes.

Par exemple, les fibres courtes du matériau composite de la peau interne 31 sont entremêlées.

Il est entendu par « entremêlées » que les fibres courtes du matériau composite sont agencées aléatoirement, c'est-à-dire qu'elles sont non-tissées. Dans ce cas, la peau interne 31 se présente sous la forme d'un mat.

Par exemple, les fibres du matériau composite de la peau interne 31 sont des fibres recyclées.

Par exemple, les fibres recyclées sont obtenues à partir des fibres de la matière première obtenue par le broyage d'un panneau présentant une composition analogue à un panneau composite 30, comme cela sera décrit dans la suite.

En variante, les fibres du matériau composite de la peau interne 31 sont des fibres non recyclées.

Par exemple, les fibres du matériau composite de la peau interne 31 sont des fibres de verre.

En variante, les fibres du matériau composite de la peau interne 31 sont des fibres naturelles, telles que des fibres de coton, de lin, de chanvre, etc.

Par exemple, le PET de la matrice du matériau composite de la peau interne 31 est du R-PET.

Par exemple, le R-PET est obtenu à partir du PET de la matière première obtenue par le broyage d'un panneau recyclable présentant une composition analogue à un panneau composite 30.

En variante, le R-PET provient du PET obtenu par le recyclage d'éléments en PET.

En variante, le PET de la matrice du matériau composite de la peau interne 31 est du PET non recyclé.

Ainsi, par exemple, le matériau composite de la peau interne 31 est obtenu à partir d'au moins un panneau recyclable broyé, le panneau recyclable présentant une composition analogue à un panneau composite 30. Cela signifie que le PET de la matrice du matériau composite de la peau interne 31 est du R-PET provenant du PET contenu dans ledit panneau recyclable broyé, et que les fibres du matériau composite de la peau interne 31 sont des fibres recyclées obtenues à partir des fibres dudit panneau recyclable broyé ou des fibres non recyclées.

La peau externe 33 définit la surface externe 30B du panneau composite 30.

Les fibres du matériau composite de la peau externe 33 sont, par exemple, des fibres longues.

Par exemple, les fibres longues du matériau composite de la peau externe 33 sont entrecroisées.

En variante, les fibres du matériau composite de la peau externe 33 sont courtes.

Par exemple, les fibres courtes du matériau composite de la peau externe 33 sont entremêlées. Dans ce cas, la peau externe 33 se présente sous la forme d'un mat.

Par exemple, les fibres de la matrice du matériau composite de la peau externe 33 sont des fibres recyclées.

Par exemple, les fibres recyclées sont obtenues à partir des fibres de la matière première obtenue par le broyage d'un panneau présentant une composition analogue à un panneau composite 30.

En variante, les fibres du matériau composite de la peau externe 33 sont des fibres non recyclées.

Par exemple, les fibres du matériau composite de la peau externe 33 sont des fibres de verre.

En variante, les fibres du matériau composite de la peau externe 33 sont des fibres naturelles, telles que des fibres de coton, de lin, de chanvre, etc.

Par exemple, le PET de la matrice du matériau composite de la peau externe 33 est du R-PET.

Par exemple, le R-PET est obtenu à partir du PET de la matière première obtenue par le broyage d'un panneau présentant une composition analogue à un panneau composite 30.

Selon un autre exemple, le R-PET provient du PET obtenu à partir du recyclage de d'éléments en PET.

En variante, le PET de la matrice du matériau composite de la peau externe 33 est du PET non recyclé.

Ainsi par exemple, le matériau composite de la peau externe 33 est obtenu à partir d'au moins un panneau recyclable présentant une composition à un panneau composite 30. Cela signifie que le PET du matériau composite de la peau externe 33 est du R-PET provenant du PET contenu dans ledit panneau recyclable broyé, et que les fibres du matériau composite de la peau externe 33 sont des fibres recyclées obtenues à partir des fibres dudit panneau recyclable broyé ou des fibres non recyclées.

Par exemple, le matériau composite de la peau interne 31 et le matériau composite de la peau externe 33 du panneau composite 30 sont des mêmes matériaux composites.

En variante, le matériau composite de la peau interne 31 et le matériau composite de la peau externe 33 du panneau composite 30 sont différents.

Dans ce cas, le matériau composite de la peau interne 31 et le matériau composite de la peau externe 33 du panneau composite 30 diffèrent l'un de l'autre par la longueur des fibres et/ou la teneur massique en fibres et/ou l'arrangement des fibres et/ou la nature des fibres, et/ou d'une finition d'aspect de surface.

Selon un exemple spécifique, la peau interne 31 et la peau externe 33 du panneau composite 30 sont réalisées dans un même matériau composite, appelé ci-après « premier matériau composite ». Le premier matériau composite est repéré sur les figures par la référence numérique 35.

Les fibres du premier matériau composite 35 sont, par exemple, des fibres longues.

Par exemple les fibres longues du premier matériau composite 35 sont entrecroisées.

Par exemple, les fibres du premier matériau composite 35 sont des fibres de verre recyclées.

Par exemple, le PET de la matrice du premier matériau composite 35 est du R-PET.

Le premier matériau composite 35 formant les peaux internes 31 et externe 33 est, par exemple, obtenu à partir d'au moins un panneau recyclable broyé, le panneau recyclable présentant une composition analogue à un panneau composite 30. Ainsi, dans le cas d'espèce, le PET du premier matériau composite 35 est du R-PET provenant du PET contenu dans ledit panneau recyclable broyé, et les fibres du premier matériau composite 35 sont des fibres recyclées obtenues à partir des fibres recyclées issues des fibres dudit panneau recyclable.

En variante, le matériau composite de la peau interne 31 et le matériau composite de la peau externe 33 sont en un deuxième matériau composite différent du premier matériau composite.

Le deuxième matériau composite comprend des fibres courtes noyées dans une matrice de PET.

En outre, par exemple, les fibres du deuxième matériau composite sont entremêlées.

Par exemple, les fibres du deuxième matériau composite sont des fibres de verre recyclées.

Par exemple, le PET de la matrice du deuxième matériau composite est du PET recyclé.

Le deuxième matériau composite est par exemple obtenu à partir d'au moins un panneau recyclable broyé, ledit panneau recyclable présentant une composition analogue à un panneau composite 30 broyé. Ainsi, le PET du deuxième matériau composite est du R-PET provenant du PET contenu dans ledit panneau recyclable broyé et les fibres du deuxième matériau composite sont des fibres recyclées obtenues à partir des fibres dudit panneau recyclable broyé.

En variante, l'une des peaux parmi la peau interne 31 et la peau externe 33 est dans le premier matériau composite 35 et l'autre des peaux parmi la peau interne 31 et la peau externe 33 est dans le deuxième matériau composite.

La peau interne 31, l'âme 32 et la peau externe 33 du panneau composite 30 sont par exemple fixées les unes aux autres par du PET.

Avantageusement, le PET servant à la fixation de la peau interne 31, de l'âme 32 et de la peau externe 33 les unes aux autres provient du PET contenu dans la peau interne 31, l'âme et la peau externe 33. En d'autres termes, l'adhésion des couches 31, 32, 33 du panneau composite 30 est réalisée par thermosoudage en utilisant le PET contenu dans ces couches 31, 32, 33.

Dans la présente description, « thermosoudage en utilisant le PET contenu dans ces couches » signifie la fusion du PET contenu dans lesdites couches par un moyen de chauffage du PET et le soudage des couches au moyen du PET fusionné. Un tel moyen de chauffage du PET est par exemple une source de chaleur ou des ultrasons configurés pour chauffer le PET contenu dans les couches.

Par exemple, la peau interne 31, l'âme 32 et la peau externe 33 sont assemblées les unes aux autres par thermo-soudure via une presse à double bande. Le PET présent au niveau des zones de contact entre la peau interne 31, l'âme 32 et la peau externe 33 est entraîné en fusion, et il n'est pas nécessaire d'ajouter de la matière supplémentaire pour l'assemblage.

Ainsi, le PET servant à la fixation de la peau interne 31, de l'âme 32 et de la peau externe 33 les unes aux autres provient du PET contenu dans la peau interne 31 et dans l'âme 32 pour fixer ensemble la peau interne 31 et l'âme 32, et du PET contenu dans la peau externe 33 et l'âme 32 pour fixer ensemble l'âme 32 et la peau externe 33.

Dans ce cas, aucune couche de colle n'est ajoutée dans le panneau composite 30 en plus de la peau interne 31, de l'âme 32 et de la peau externe 33 pour fixer la peau interne 31, l'âme 32 et la peau externe 33 les unes aux autres.

Une telle adhésion en utilisant le PET des couches est possible grâce aux propriétés thermosoudables du PET.

Alternativement, le PET servant à la fixation de la peau interne 31, de l'âme 32 et de la peau externe 33 les unes aux autres provient d'une couche de colle en PET ajoutée.

Dans ce cas, une première couche de colle en PET ajoutée s'étend par exemple entre la peau interne et l'âme et une deuxième couche de colle en PET ajoutée s'étend par exemple entre l'âme et la peau externe.

Le panneau composite 30 est un panneau recyclable.

Le panneau composite 30 est broyable.

Le panneau composite 30 broyé forme une matière première utilisable, appelée dans la suite « matière première issue de panneau composite 30 ».

La matière première issue de panneau composite 30 comprend des fibres courtes et du PET.

Le panneau composite 30 broyé permet la séparation du PET et des fibres l'un de l'autre ce qui permet d'obtenir du PET séparé et des fibres séparées à partir de la matière première issue de panneau composite 30.

Ainsi, le PET séparé issu du panneau composite 30 broyé est utilisable pour réaliser la matrice des peaux interne 31 et externe 33 de nouveaux panneaux composites 30 en R-PET.

En outre, à partir des fibres courtes séparées il est possible de réaliser des fibres longues recyclées.

En particulier, à partir des fibres courtes de verre séparées, il est possible de réaliser des fibres longues de verre recyclées, notamment par fusion des fibres courtes de verre séparées.

Il est ainsi possible de réaliser un matériau composite recyclé comprenant des fibres longues recyclées noyées dans une matrice de R-PET à partir de la matière première issue de panneau composite 30.

En d'autres termes, il est possible de réaliser le premier matériau composite 35 des peaux interne 31 et externe 33 d'un nouveau panneau composite 30 à partir d'un panneau composite 30 broyé.

En outre, à partir dudit PET séparé issu de la matière première de panneau composite 30, il est possible de réaliser la mousse de l'âme 32 en R-PET d'un nouveau panneau composite 30.

Ainsi, un nouveau panneau composite 30 peut être obtenu à partir d'un panneau composite 30 broyé, notamment d'un panneau composite 30 usagé broyé.

Un tel nouveau panneau composite 30 comprenant du R-PET et/ou des fibres recyclées est également recyclable.

En outre, il est aussi possible de réutiliser la matière première issu de panneau composite 30, pour réaliser des pièces en un autre matériau composite recyclé comprenant des fibres courtes recyclées noyées dans une matrice de R-PET, par exemple en chauffant la matière première issue de panneau composite 30. On comprend que lesdites fibres courtes recyclées sont les fibres courtes de la matière première de panneau composite 30 et que le R-PET de la matrice est obtenu à partir du PET contenu dans la matière première de panneau composite 30.

Le deuxième matériau composite 45 est donc réalisable à partir d'un panneau composite 30 broyé.

De telles pièces peuvent être obtenues par injection ou extrusion de ladite matière première issue de panneau composite 30 chauffée.

Il est à noter que l'épaisseur des différentes couches des panneaux composites 30 peut varier d'un panneau composite à l'autre, notamment en fonction de la nature de la paroi du véhicule 6.

Par exemple, les panneaux composites des parois composites 14, 16, 18, 20, 22 sont analogues.

En variante, le panneau composite de l'une des parois composites 14, 16, 18, 20, 22 présente au moins un paramètre différent du panneau composite des autres parois composites 14, 16, 18, 20, 22.

Un tel paramètre est par exemple un paramètre choisi dans la liste de paramètres suivantes :
- le nombre de couches du panneau composite,
- la longueur des fibres et/ou la teneur massique en fibres et/ou l'agencement des fibres et/ou la nature des fibres du matériau composite pour la peau interne et pour la peau externe,
- la densité de la mousse de PET de l'âme.

Ainsi, par exemple, le matériau composite de la peau interne et le matériau composite de la peau externe d'une paroi composite sont dans le premier matériau composite. En outre, par exemple, pour une autre paroi composite, le matériau composite de la peau interne est dans le deuxième matériau composite et le matériau composite de la peau externe est dans le premier matériau composite.

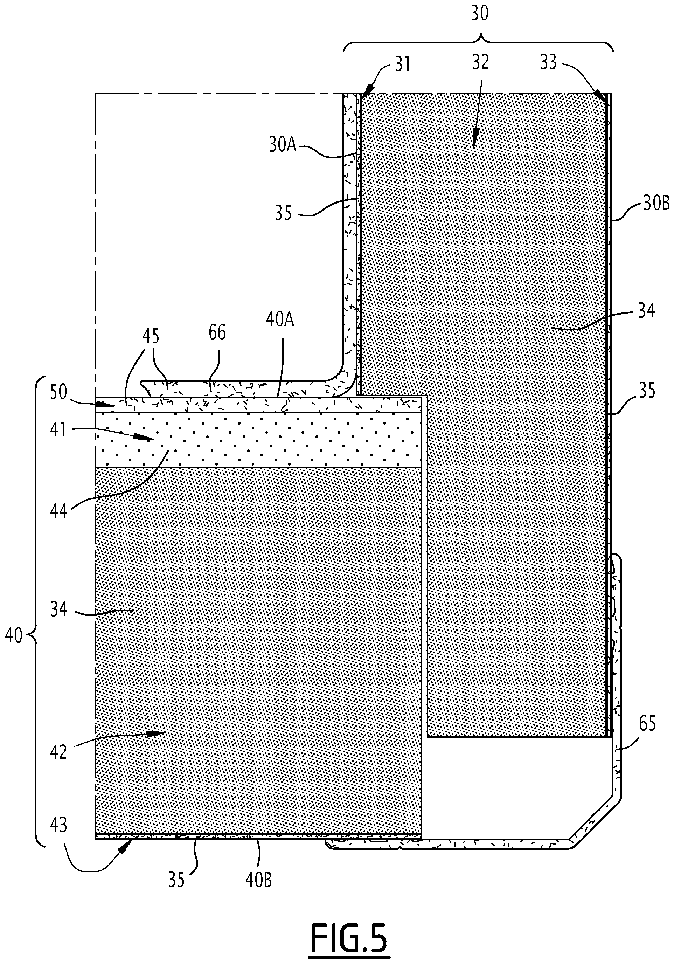

Comme visible sur la figure 5, la paroi inférieure 24 s'étend dans un plan sensiblement perpendiculaire à la direction d'élévation. La paroi inférieure 24 définit un plancher du véhicule 6.

La paroi inférieure 24 comprend au moins un panneau de plancher 40.

Le panneau de plancher 40 comprend une surface interne 24A et une surface externe 24B.

Le panneau de plancher 40 comprend depuis sa surface interne 24A vers sa surface externe 24B un revêtement interne 50, une couche de renfort 41, une âme 42 en mousse de PET et un revêtement externe 43.

Le revêtement interne 50 est par exemple en un matériau composite comprenant des fibres noyées dans une matrice de PET.

Par exemple, le matériau composite du revêtement interne 50 est obtenu à partir d'au moins un panneau recyclable broyé, le panneau recyclable présentant une composition analogue à un panneau composite 30 broyé. Cela signifie que le PET de la matrice du matériau composite du revêtement interne 50 est du R-PET provenant du PET contenu dans ledit panneau recyclable broyé, et que les fibres du matériau composite sont des fibres recyclées issues des fibres dudit panneau recyclable broyé.

Les fibres recyclées sont avantageusement des fibres courtes.

Le matériau composite du revêtement interne 50 est, par exemple, dans le deuxième matériau composite décrit précédemment. Le deuxième matériau composite est repéré sur la figure 5 par la référence numérique 45.

La couche de renfort 41 du panneau de plancher 40 est réalisée dans une mousse de PET.

La mousse de PET de la couche de renfort 41 du panneau de plancher 40 est par exemple en une deuxième mousse de PET 44.

La deuxième mousse de PET 44 présente, par exemple, une densité strictement supérieure à la première mousse de PET 34.

La deuxième mousse de PET 44 est par exemple une mousse haute densité présentant une densité supérieure ou égale à 70 kg.m⁻³.

La mousse de l'âme 42 du panneau de plancher 40 est par exemple dans la première mousse 34 en PET.

Alternativement, l'âme 42 du panneau de plancher 40 est réalisée dans une mousse de PET distincte de la première mousse de PET 34 et présente dans ce cas une densité différente de la première mousse de PET 34.

Le revêtement externe 43 du panneau de plancher 40 est réalisé en un matériau composite comprenant des fibres noyées dans une matrice en PET.

Le matériau composite du revêtement externe 43 du panneau de plancher 40 est par exemple dans le premier matériau composite 35.

Le revêtement interne 50, la couche de renfort 41, l'âme 42, le revêtement externe 43 du panneau de plancher 40 sont par exemple fixées les unes aux autres par du PET.

Avantageusement, le PET servant à la fixation du revêtement interne 50, de la couche de renfort 41, de l'âme 42 et du revêtement externe 43 les unes aux autres provient du PET contenu au moins dans la couche de renfort 41, dans l'âme 42 et dans le revêtement externe 43 pour fixer le revêtement interne 50, la couche de renfort 41, l'âme 42 et le revêtement externe 43 les uns aux autres.

Ainsi, dans ce cas, aucune couche de colle n'est ajoutée en plus du revêtement interne 50, de la couche de renfort 41, de l'âme 42 et du revêtement externe 43 dans le panneau de plancher 40 pour fixer le revêtement interne 50, la couche de renfort 41, l'âme 42 et le revêtement externe 43 les uns aux autres. En d'autres termes, l'adhésion des couches 50, 41, 42, 43 du panneau de plancher 40 est réalisée par thermosoudage en utilisant le PET contenu dans tout ou partie des couches 50, 41, 42, 43.

Alternativement, le PET servant à la fixation du revêtement interne 50, de la couche de renfort 41, de l'âme 42 et du revêtement externe 43 est une couche de colle en PET ajoutée.

Dans ce cas par exemple une première couche de colle en PET ajoutée s'étend entre le revêtement externe 50 et le revêtement interne 41, une deuxième couche de colle en PET ajoutée s'étend entre le revêtement interne 41 et l'âme 42 et une troisième couche de colle en PET ajoutée s'étend entre l'âme 42 et le revêtement externe 43 pour assembler les différentes couches du panneau de plancher 40.

Le panneau de plancher 40 est recyclable.

Le panneau de plancher 40 est broyable.

Le panneau de plancher 40 broyé forme une matière première utilisable, appelée dans la suite « matière première de panneau de plancher 40 ».

La matière première issue de panneau de plancher 40 comprend des fibres courtes et du PET.

Le panneau de plancher 40 broyé permet la séparation du PET et des fibres afin d'obtenir du PET séparé et des fibres séparées à partir de la matière première de panneau de plancher 40..

Ainsi, le PET séparé provenant du panneau de plancher 40 broyé est par exemple utilisable pour réaliser la matrice des peaux interne 31 et externe 33 des panneaux composites 30, le revêtement externe 50 du panneau de plancher 40, la mousse de l'âme 32 des panneaux composites 30 et la mousse de l'âme 42 du panneau de plancher 40 en R-PET.

En outre, à partir des fibres séparées provenant du panneau de plancher 40 broyé, il est possible de réaliser des fibres longues recyclées.

En particulier, à partir des fibres courtes de verre séparées, il est possible de réaliser des fibres longues de verre recyclées, notamment par fusion des fibres courtes de verre séparées.

En outre, il est aussi possible de réutiliser la matière première issu de panneau de plancher 40 pour réaliser des pièces en un matériau composite recyclé comprenant des fibres courtes recyclées noyées dans une matrice en R-PET, par exemple en chauffant la matière première issue de panneau de plancher 40. On comprend que lesdites fibres courtes recyclées sont les fibres courtes de la matière première de panneau de plancher 40 et que le R-PET de la matrice est obtenu à partir du PET contenu dans la matière première de panneau de plancher 40.

Selon une variante du panneau de plancher 40, le revêtement interne 50 du panneau de plancher 40 est en métal.

Le métal est par exemple de l'aluminium.

Dans ce cas, le revêtement interne 50 est par exemple une plaque de métal.

La plaque de métal présente par exemple un motif en relief du type « grain de riz ».

Dans ce cas, le revêtement interne 50 en métal est fixé de manière détachable au reste du panneau de plancher 40.

Grâce au fait que le revêtement interne 50 est détachable du reste du panneau de plancher 40, il est possible de détacher le revêtement interne 50 du reste du panneau de plancher 40 pour recycler l'ensemble formé par la couche de renfort 41, l'âme 42 et le revêtement externe 43 du panneau de plancher 40.

Par exemple, l'élément de liaison est lié aux au moins deux faces assemblées par du PET.

L'élément de liaison est réalisé en un matériau composite comprenant des fibres noyées dans une matrice de PET, le matériau composite étant obtenu à partir d'au moins un panneau recyclable broyé, le panneau recyclable présentant une composition analogue à un panneau composite 30 broyé. Cela signifie que le PET de la matrice du matériau composite de l'élément de liaison est du R-PET provenant du PET contenu dans ledit panneau recyclable, et que les fibres du matériau composite de l'élément de liaison sont des fibres recyclées obtenues à partir des fibres dudit panneau recyclable.

Les fibres recyclées sont avantageusement des fibres courtes.

Par exemple, le matériau composite de l'élément de liaison est le deuxième matériau composite 45.

Dans le cas d'espèce, l'ensemble de carrosserie 12 comprend plusieurs éléments de liaison.

Sur la figure 3, seuls six éléments de liaison 61, 62, 63, 64, 65, 66 sont visibles. Les six éléments de liaison 61, 62, 63, 64, 65, 66 sont décrits dans ce qui suit.

Le premier élément de liaison 61 est lié aux surfaces externes 22B, 14B de la paroi supérieure 22 et de la première parois latérales 14.

Le deuxième élément de liaison 62 est lié aux surfaces externes 24B, 14B de la paroi inférieure 24 et de la première parois latérales 14.

Le troisième élément de liaison 63 est lié aux surfaces internes 24A, 14A de la paroi inférieure 24 et de la première paroi latérale 14.

Le quatrième élément de liaison 64 est lié aux surfaces externes 22B, 16B de la paroi supérieure 22 et de la deuxième paroi latérale 16.

Le cinquième élément de liaison 65 est lié aux surfaces externes 24B, 16B de la paroi inférieure 24 et de la deuxième paroi latérale 16.

Le sixième élément de liaison 66 est lié aux surfaces internes 24A, 16A de la paroi inférieure 24 et de la deuxième paroi latérale 16.

Comme visible sur les figures 4 et 5, chaque élément de liaison 61, 62, 63, 64, 65, 66 présente en coupe une forme de « L ».

Par exemple, l'ensemble de carrosserie 12 comprend d'autres éléments de liaison non représentés sur les figures.

Par exemple, au moins l'un des éléments de liaison est par exemple réalisé dans le deuxième matériau composite 45.

Dans l'exemple illustré, chaque élément de liaison est réalisé dans le deuxième matériau composite 45.

En variante, certains éléments de liaison sont réalisés dans le deuxième matériau composite 45 et d'autres éléments de liaison sont réalisés dans un matériau présentant une nature différente du deuxième matériau composite 45, le matériau présentant une nature différente du deuxième matériau composite 45 étant par exemple un métal.

Le métal comprend par exemple de l'aluminium.

Dans ce cas, les éléments de liaison en métal sont détachables par exemple.

Par exemple, l'ensemble de carrosserie comprend en outre des pièces de jonction, par exemple de type « coins ».

Ces pièces de type coins relient par exemple la paroi supérieure 22 aux parois latérales 14, 16 et à la paroi avant 18 et/ou reliant la paroi inférieure 24 aux parois latérales 14, 16 et à la paroi avant 18.

Par exemple, les pièces de jonction sont dans le deuxième matériau composite 45. Par exemple, les pièces de jonction sont réalisées par injection.

Un procédé de fabrication d'un ensemble de l'ensemble de carrosserie 12 selon l'invention est décrit dans la suite.

Le procédé de fabrication comprend une étape de réalisation de la ou chaque paroi composite de l'ensemble de carrosserie 12 comprenant au moins un panneau composite 30.

Dans le cas d'espèce, le procédé de fabrication de l'ensemble de carrosserie 12 illustré sur les figures 1 à 5 comprend la réalisation de chacune des cinq parois composites 14, 16, 18, 20, 22.

La réalisation de chacune des cinq parois composites 14, 16, 18, 20, 22 comprend la réalisation du panneau composite 30 de cette paroi composite 14, 16, 18, 20, 22.

La réalisation du panneau composite 30 comprend l'assemblage de l'âme 32, de la peau interne 31 et de la peau externe 33 les unes aux autres, avantageusement avec du PET, de sorte à obtenir le panneau composite 30.

Avantageusement la peau interne 31, l'âme 32 et la peau externe 33 sont assemblées par thermosoudage en utilisant le PET contenu dans la peau interne 31, l'âme 32 et la peau externe 33.

Ainsi, dans ce cas, aucune couche de colle n'est ajoutée dans le panneau composite 30 en plus de la peau interne 31, de l'âme 32 et de la peau externe 33 pour fixer la peau interne 31, l'âme 32 et la peau externe 33 les unes aux autres.

Par exemple, le procédé de fabrication de l'ensemble de carrosserie 12 comprend le broyage d'au moins un panneau recyclable présentant une composition analogue à un panneau composite 30 pour obtenir une matière première issue de panneau composite 30.

Un tel panneau recyclable apte à être broyé comprend du PET non recyclé ou du R-PET, et des fibres non-recyclées ou des fibres recyclées.

En d'autres termes, au moins un panneau composite 30, notamment usagé, est broyé pour obtenir la matière première issue de panneau composite 30.

Avantageusement, le procédé comprend le broyage de plusieurs panneaux composites 30 pour obtenir la matière première issue de panneau composite 30.

Par exemple, le procédé de fabrication comprend la séparation du PET et des fibres l'un de l'autre d'au moins une partie de la matière première issue de panneau composite 30 obtenue pour obtenir du PET séparé et des fibres séparées.

Par exemple, la réalisation du panneau composite 30 comprend, en outre, la réalisation des peaux interne 31 et externe 33 du panneau composite 30 chacune dans le premier matériau composite 35.

Le procédé comprend, par exemple, la réalisation du premier matériau composite 35.

Le premier matériau composite 35 est réalisé à partir de la matière première issue de panneau composite 30.

Par exemple, la réalisation du premier matériau composite 35 comprend :
- la réalisation de la matrice en PET du premier matériau composite 35 à partir du PET séparé provenant de la matière première issue de panneau composite 30, le PET de la matrice réalisée étant du R-PET,
- la réalisation des fibres longues du premier matériau composite 35 à partir des fibres séparées provenant de la matière première issue de panneau composite 30, les fibres longues obtenues étant des fibres longues recyclées,
- la fabrication du premier matériau composite 35 à partir de la matrice réalisée en R-PET et des fibres longues recyclées réalisées.

Par exemple, les fibres longues recyclées en verre du premier matériau composite 35 sont réalisée en réalisant une fusion des fibres courtes de verre séparées et en fabriquant lesdites fibres longues à partir de la matière en fusion obtenue.

En variante, les fibres du premier matériau composite 35 sont des fibres longues non recyclées. Ainsi, la réalisation du premier matériau composite 35 ne comprend pas la réalisation des fibres longues recyclées du premier matériau composite 35.

Dans ce cas, des fibres longues non recyclées sont fournies. Le premier matériau composite 35 est alors fabriqué à partir de la matrice réalisée en R-PET et des fibres longues fournies.

Le procédé comprend en outre la réalisation en tant que telle des peaux interne 31 et externe 33 à partir du premier matériau composite 35 réalisé.

Par exemple, la réalisation du panneau composite 30 comprend, en outre, la réalisation de l'âme 32 du panneau composite 30 dans la mousse de PET.

La mousse de PET de l'âme 32 est par exemple réalisée en R-PET à partir de PET obtenu par le recyclage d'éléments en PET ou du PET séparé provenant de la matière première issue de panneau composite 30.

Ainsi, la première mousse de PET 34 de l'âme 32 du panneau composite 30 est par exemple réalisée en R-PET à partir de PET obtenu par le recyclage d'éléments en plastique ou du PET séparé provenant de la matière première issue de panneau composite 30.

La réalisation de la paroi inférieure 24 comprend la réalisation du panneau de plancher 40.

La réalisation du panneau de plancher 40 comprend l'assemblage du revêtement interne 50, de la couche de renfort 41, de l'âme 42, et du revêtement externe 43 les uns aux autres, avantageusement avec du PET, de sorte à obtenir ledit panneau de plancher 40.

Avantageusement le revêtement interne 50, de la couche de renfort 41, de l'âme 42, et du revêtement externe 43 sont assemblées par thermosoudage en utilisant le PET contenu au moins dans la couche de renfort 41, l'âme 42, et le revêtement externe 43.

Ainsi, dans ce cas, aucune couche de colle n'est ajoutée en plus du revêtement interne 50, de la couche de renfort 41, de l'âme 42, et du revêtement externe 43 pour fixer le revêtement interne 50, la couche de renfort 41, l'âme 42, et le revêtement externe 43 les unes aux autres.

Alternativement, une première couche de colle en PET est ajoutée entre le revêtement externe 50 et le revêtement interne 41, une deuxième couche de colle en PET est ajoutée entre le revêtement interne 41 et l'âme 42 et une troisième couche de colle en PET est ajoutée entre l'âme 42 et le revêtement externe 43 pour assembler les différentes couches du panneau de plancher 40.

Par exemple, la réalisation du panneau de plancher 40 comprend la réalisation du revêtement interne 50 dans le deuxième matériau composite 45.

Le procédé comprend par exemple la réalisation du deuxième matériau composite 45.

Le deuxième matériau composite 45 est par exemple obtenu à partir de la matière première issue de panneau composite 30.

Par exemple, pour obtenir le deuxième matériau composite 45, au moins une partie de la matière première issue de panneau composite 30 obtenue est chauffée.

Le PET du deuxième matériau composite 45 est dans ce cas du R-PET obtenu à partir du PET contenu dans la matière première issue de panneau composite 30. En outre, les fibres du deuxième matériau composite 45 sont des fibres recyclées correspondant aux fibres séparées contenues dans la matière première issue de panneau composite 30.

Par exemple, la réalisation du panneau de plancher 40 comprend, en outre, la réalisation des mousses de la couche de renfort interne 41 et de l'âme 42 à partir de la matière première de panneau composite 30 obtenue.

En particulier, la réalisation de la couche de renfort 41 et de l'âme 42 du panneau composite 40 comprend la réalisation de la mousse du renfort interne 41 et de la mousse de l'âme 42 en R-PET à partir du PET séparé provenant de la matière première issue de panneau composite 30.

Ainsi, la deuxième mousse de PET 44 de la couche de renfort 41 est par exemple réalisée en R-PET à partir de PET obtenu par le recyclage d'éléments en PET ou du PET séparé provenant de la matière première issue de panneau composite 30.

Ainsi, la première mousse de PET 34 de l'âme 42 est par exemple réalisée en R-PET à partir de PET obtenu par le recyclage d'éléments en PET ou du PET séparé provenant de la matière première issue de panneau composite 30.

Par exemple, la réalisation du panneau de plancher 40 comprend, en outre, la réalisation du revêtement externe 43 dans le premier matériau composite 35.

En particulier, le revêtement externe 43 est réalisé de la même manière que les peaux interne 31 et externe 33 du panneau composite 30 tel que décrit précédemment.

Dans un tel cas le PET du revêtement externe 43 est du R-PET et les fibres du revêtement externe 43 sont des fibres recyclées ou des fibres non recyclées.

Le procédé comprend l'assemblage des parois 14, 16, 18, 20, 22, 24 réalisées les unes aux autres.

Dans le cas d'espèce, le procédé comprend l'assemblage des six parois 14, 16, 18, 20, 22, 24 les unes aux autres.

Par exemples les parois 14, 16, 18, 20, 22, 24 sont assemblées les unes aux autres par des éléments de fixation.

Le procédé comprend en outre la réalisation des éléments de liaison dans le deuxième matériau composite 45 obtenu à partir de ladite matière première issue de panneau composite 30.

Par exemple, les éléments de liaison sont réalisés par injection ou extrusion de la matière première issue de panneau composite 30 chauffée.

Dans un tel cas le PET des éléments de liaison est du R-PET.

Par exemple, le procédé comprend en outre la liaison de l'élément de liaison aux faces internes et/ou aux faces externes des parois assemblées 14, 16, 18, 20, 22, 24.

La liaison est réalisée par du PET, avantageusement par thermosoudage en utilisant le PET contenu au moins dans les éléments de liaison.

Dans le procédé décrit ci-dessus, les six parois de l'ensemble de carrosserie 12 sont réalisées séparément les unes des autres avant leur assemblage.

En variante, au moins deux des parois composites 30 de l'ensemble de carrosserie 12 sont réalisées à partir d'une seule pièce dans laquelle est réalisé un affaiblissement de matière en ne conservant que la peau extérieure des panneaux composites composant ces deux parois, les affaiblissements de matière délimitant les parois composites.

Ceci est particulièrement avantageux puisqu'il y a une continuité de matière entre les deux parois composites réalisées à partir d'une seule pièce au niveau des peaux externes 33 des panneaux composites 30 de ces parois composites.

Dans ce cas, les deux parois composites réalisées à partir d'une seule pièce sont pliées de sorte à définir au moins en partie l'enceinte réfrigérée 26 et thermosoudées l'une à l'autre.

Ensuite, les autres parois de l'ensemble de carrosserie sont assemblées aux deux parois composites thermosoudées.

En variante du procédé de fabrication, les cinq parois composites 14, 16, 18, 20, 22 sont fabriquées à partir d'une seule pièce dans laquelle sont réalisés des affaiblissements de matière en ne conservant que la peau extérieure 33 des panneaux composites 30 composants ces parois 14, 16, 18, 20, 22, les affaiblissements de matière délimitant les parois composites.

Ceci est particulièrement avantageux puisqu'il y a une continuité de matière entre les parois composites 14, 16, 18, 20, 22 au niveau des peaux externes 33 des panneaux composites 30 composant ces parois composites 14, 16, 18, 20, 22.

Ainsi, selon cette variante, l'assemblage des six parois 14, 16, 18, 20, 22, 24 comprend :
- le pliage des cinq parois composites 14, 16, 18, 20, 22 de sorte à définir au moins en partie l'enceinte réfrigérée 26,
- pour chaque paire de parois composites adjacentes, le thermosoudage des deux parois composites de la paire pour les assembler, et
- l'assemblage de la paroi inférieure aux cinq parois composites 14, 16, 18, 20, 22 assemblées.

L'ensemble de carrosserie 12 selon l'invention est plus respectueux de l'environnement en étant aisément recyclable et de manière peu coûteuse.

En particulier, chaque panneau composite 30 selon l'invention est recyclable.

En particulier, chaque panneau composite 30 selon l'invention est broyable et permet d'obtenir une matière première issue de panneau composite 30.

A partir de cette matière première issue de panneau composite 30 comprenant du PET et des fibres courtes, il est possible de réaliser d'autres pièces.

En particulier, un tel panneau broyé est une matière recyclable à partir de laquelle il est possible de réaliser de nouvelles pièces en un matériau composite comprenant des fibres longues ou des fibres courtes noyées dans une matrice de PET.

Ces nouvelles pièces sont par exemple les peaux interne 31 et externe 33 de nouveaux panneaux composites, les pièces de liaison, les pièces de jonction, etc.

En particulier, en chauffant la matière première issue de panneau composite 30 obtenue, il est possible de réaliser des pièces comprenant des fibres courtes noyées dans une matrice en PET.

Ces pièces sont par exemple obtenues par extrusion ou par injection de la matière première issue de panneau composite 30 préalablement chauffée.

Ainsi, dans ces pièces obtenues, le PET est du R-PET.

En outre, le PET et les fibres de la matière première issue de panneau composite 30 obtenue peuvent être séparés l'un de l'autre et réutilisées pour créer de nouveaux panneaux composites.

En particulier, il est possible de recréer des fibres longues, par exemple en faisant fondre les fibres séparées. Il est aussi possible de réutiliser le PET séparé pour fabriquer une matrice.

Il est ainsi possible de recréer un matériau composite pour un nouveau panneau composite 30 à partir d'un panneau composite 30 broyé.

Ainsi, des peaux interne 31 et externe 33 de nouveaux panneaux composites peuvent être obtenu à partir de panneaux composites 30 broyées.

En outre, grâce au PET séparé, la mousse de PET de l'âme 32 des panneaux composites 30 peut être réalisée.

En outre les chutes de production des panneaux composites 30 sont recyclables et réutilisables.

Ainsi, grâce à l'invention, un ensemble de carrosserie 12 recyclable est obtenu et, ce, de manière simple et peu coûteuse.

## Revendications

1. Ensemble de carrosserie (12) pour véhicule (6) frigorifique comprenant au moins une paroi composite (14, 16, 18, 20, 22) comprenant au moins un panneau composite (30), le ou chaque panneau composite (30) comprenant une surface interne (30A), délimitant au moins une partie d'une enceinte réfrigérée (26), et une surface externe (30B), séparant l'ensemble de carrosserie (12) de l'environnement externe du véhicule (6) frigorifique, le ou chaque panneau composite (30) comprenant depuis sa surface interne (30A) vers sa surface externe (30B), une peau interne (31), une âme (32) en mousse de polyéthylène téréphtalate (PET) et une peau externe (33),
**caractérisé en ce que**, pour le ou chaque panneau composite (30), la peau externe (33) définit la surface externe (30B) de ce panneau composite (30),
**en ce que**, pour le ou chaque panneau composite (30), la peau interne (31) de ce panneau composite (30) est réalisée en un matériau composite (35) comprenant des fibres noyées dans une matrice en PET et la peau externe (33) de ce panneau composite (30) est réalisée en un matériau composite (35) comprenant des fibres noyées dans une matrice en PET, et
**en ce que** la peau interne (31), l'âme (32) et la peau externe (33) du ou de chaque panneau composite (30) sont fixées les unes aux autres par du PET.

2. Ensemble de carrosserie selon la revendication 1, dans lequel le matériau composite (35) de la peau interne (31) et le matériau composite (35) de la peau externe (33) du ou de chaque panneau composite (30) sont chacun obtenus à partir d'au moins un panneau recyclable broyé, ledit panneau recyclable présentant une composition analogue à un panneau composite (30), le PET de la matrice du matériau composite (35) de la peau interne (31) et le PET du matériau composite (35) de la peau externe (33) étant du PET recyclé issu du PET du panneau recyclable broyé.

3. Ensemble de carrosserie selon l'une quelconque des revendications précédentes, comprenant au moins deux parois (14, 16, 18, 20, 22, 24) assemblées l'une à l'autre, au moins l'une des deux parois assemblées étant une paroi composite (14, 16, 18, 20, 22), l'ensemble de carrosserie (12) comprenant, en outre, un élément de liaison (61, 62, 63, 64, 65, 66) lié aux faces internes (14A, 16A, 22A, 24A) des deux parois (14, 16, 18, 20, 22, 24) assemblées ou aux faces externes (14B, 16B, 22B, 24B) des deux parois (14, 16, 18, 20, 22, 24) assemblées, avantageusement avec du PET.

4. Ensemble de carrosserie selon la revendication 3, dans lequel l'élément de liaison (61, 62, 63, 64, 65, 66) est réalisé en un matériau composite (45) comprenant des fibres noyées dans une matrice de PET, ledit matériau composite (45) de l'élément de liaison (61, 62, 63, 64, 65, 66) étant obtenu à partir d'au moins un panneau recyclable broyé, ledit panneau recyclable présentant une composition analogue à un panneau composite (30), le PET de la matrice du matériau composite (45) de l'élément de liaison (61, 62, 63, 64, 65, 66) étant du PET recyclé issu du PET du panneau recyclable broyé et les fibres du matériau composite (45) de l'élément de liaison (61, 62, 63, 64, 65, 66) étant des fibres recyclées obtenues à partir des fibres du panneau recyclable broyé.

5. Ensemble de carrosserie selon l'une quelconque des revendications précédentes, dans lequel la ou chaque paroi composite (14, 16, 18, 20, 22) est destinée à définir une paroi latérale (14, 16), une paroi avant (18), une paroi arrière (20) ou une paroi supérieure (22) du véhicule (6) frigorifique, l'ensemble de carrosserie (12) comprenant, en outre, une paroi inférieure (24) destinée à former un plancher du véhicule (6) frigorifique, la paroi inférieure (24) comprenant au moins un panneau de plancher (40) présentant une surface interne (24A) délimitant au moins en partie l'enceinte réfrigérée (26), le panneau de plancher (40) comprenant un revêtement interne (50) définissant la surface interne (24A) du panneau de plancher (40), le revêtement interne (50) étant en un matériau composite (45) comprenant des fibres noyées dans une matrice de PET, ledit matériau composite (45) du revêtement interne (50) étant avantageusement obtenu à partir d'au moins un panneau recyclable broyé, ledit panneau recyclable présentant une composition analogue à un panneau composite (30), le PET de la matrice du matériau composite (45) du revêtement interne (50) étant avantageusement du PET recyclé issu du PET du panneau recyclable broyé, les fibres du matériau composite (45) du revêtement interne (50) étant avantageusement des fibres recyclées obtenues à partir des fibres du panneau recyclable broyé.

6. Procédé de fabrication d'un ensemble de carrosserie (12) selon l'une quelconque des revendications précédentes, comprenant la réalisation de la ou chaque paroi composite (14, 16, 18, 20, 22), la réalisation de la ou chaque paroi composite (14, 16, 18, 20, 22) comprenant la réalisation du ou de chaque panneau composite (30) de cette paroi composite (14, 16, 18, 20, 22), la réalisation du ou de chaque panneau composite (30) comprenant l'assemblage de l'âme (31), de la peau interne (32) et de la peau externe (33) les unes aux autres avec du PET, de sorte à obtenir ledit panneau composite (30).

7. Procédé de fabrication selon la revendication 6, comprenant, en outre, :
- le broyage d'au moins un panneau recyclable présentant une composition analogue à un panneau composite (30) pour obtenir une matière première,
- la réalisation d'un matériau composite (35) de peau interne comprenant des fibres noyées dans une matrice en PET à partir de ladite matière première obtenue, le PET de la matrice du matériau composite (35) de peau interne réalisé étant du PET recyclé,
- la réalisation d'un matériau composite (35) de peau externe comprenant des fibres noyées dans une matrice en PET à partir de ladite matière première obtenue, le PET de la matrice du matériau composite (35) de peau externe réalisé étant du PET recyclé,
- la réalisation du ou de chaque panneau composite (30) comprenant, en outre, la réalisation de la peau interne (31) de ce panneau composite (30) à partir du matériau composite (35) de peau interne réalisé et la réalisation de la peau externe (33) de ce panneau composite (30) à partir du matériau composite (35) de peau externe réalisé.

8. Procédé de fabrication selon la revendication 7, comprenant, en outre, la séparation l'un de l'autre du PET de ladite matière première obtenue et des fibres de ladite matière première obtenue pour obtenir du PET séparé et des fibres séparées, le PET recyclé de la matrice du matériau composite (35) de peau interne étant obtenue à partir du PET séparé et le PET recyclé de la matrice du matériau composite (35) de peau externe étant obtenue à partir du PET séparé.

9. Procédé de fabrication selon l'une quelconque des revendications 6 à 8, dans lequel l'ensemble de carrosserie (12) comprend au moins deux parois (14, 16, 18, 20, 22, 24) assemblées l'une à l'autre, au moins l'une des deux parois (14, 16, 18, 20, 22, 24) assemblées étant une paroi composite (30), l'ensemble de carrosserie (12) comprenant, en outre, un élément de liaison (61, 62, 63, 64, 65, 66) lié aux faces internes (14A, 16A, 22A, 24A) des deux parois (14, 16, 18, 20, 22, 24) assemblées ou aux faces externes (14B, 16B, 22B, 24B) des deux parois (14, 16, 18, 20, 22, 24) assemblées, avantageusement avec du PET, le procédé comprenant :
- l'assemblage des deux parois (14, 16, 18, 20, 22, 24) l'une à l'autre,
- la liaison de l'élément de liaison (61, 62, 63, 64, 65, 66) aux faces internes (14A, 16A, 22A, 24A) des deux parois (14, 16, 18, 20, 22, 24) assemblées ou aux faces externes (14B, 16B, 22B, 24B) des deux parois assemblées (14, 16, 18, 20, 22, 24), avantageusement avec du PET.

10. Procédé selon la revendication 9, comprenant, en outre :
- le broyage d'au moins un panneau recyclable présentant une composition analogue à un panneau composite (30) pour obtenir une matière première,
- la réalisation d'un matériau composite (45) d'élément de liaison comprenant des fibres noyées dans une matrice en PET à partir de ladite matière première obtenue, le PET de la matrice du matériau composite (45) d'élément de liaison réalisé étant du PET recyclé issu du PET de la matière première obtenue, les fibres du matériau composite (45) d'élément de liaison réalisé étant des fibres recyclées obtenues à partir des fibres de la matière première obtenue,
- la réalisation de l'élément de liaison (61, 62, 63, 64, 65, 66) dans le matériau composite (45) d'élément de liaison réalisé.

11. Procédé de fabrication selon l'une quelconque des revendications 6 à 10, dans lequel la ou chaque paroi composite (14, 16, 18, 20, 22) est destinée à définir une paroi latérale (14, 16), une paroi avant (18), une paroi arrière (20) ou une paroi supérieure (22) du véhicule (6) frigorifique, l'ensemble de carrosserie (12) comprenant, en outre, une paroi inférieure (24) destinée à former un plancher du véhicule (6) frigorifique, la paroi inférieure (24) comprenant au moins un panneau de plancher (40) présentant une surface interne (24A) délimitant au moins en partie l'enceinte réfrigérée (26), le panneau de plancher (40) comprenant un revêtement interne (50) définissant la surface interne (24A) du panneau de plancher (40), le revêtement interne (50) étant en un matériau composite (45) comprenant des fibres noyées dans une matrice de PET,
le procédé comprenant en outre :
- le broyage d'un panneau recyclable présentant une composition analogue à un panneau composite (30) pour obtenir une matière première,
- la réalisation d'un matériau composite (45) de revêtement interne comprenant des fibres noyées dans une matrice en PET à partir de ladite matière première obtenue, le PET de la matrice du matériau composite (45) de revêtement interne réalisé étant du PET recyclé issu du PET de la matière première obtenue, les fibres du matériau composite (45) de revêtement interne réalisé étant des fibres recyclées obtenues à partir des fibres de la matière première obtenue,
- la réalisation de la paroi inférieure (24), la réalisation de la paroi inférieure (24) comprenant la réalisation du panneau de plancher (40) de la paroi inférieure (24), la réalisation du panneau de plancher (40) comprenant la réalisation du revêtement interne (50) du panneau de plancher (40) dans le matériau composite (45) de revêtement interne réalisé.
